# FASCICULE DE BREVET EUROPEEN

(11) **EP 2 807 656 B1**
(45) Date de publication et mention de la délivrance du brevet: **14.03.2018**
(21) Numéro de dépôt: 13704192.7
(22) Date de dépôt: 23.01.2013
(51) Int. Cl.: H01B 3/44, C08F 255/02, H01B 7/28

(54) **CABLE ELECTRIQUE A MOYENNE OU HAUTE TENSION**
MITTEL- ODER HOCHSPANNUNGSSTROMKABEL
MEDIUM- OR HIGH-VOLTAGE ELECTRIC CABLE

(30) Priorité: 23.01.2012 FR 1250634
(43) Date de publication de la demande: 03.12.2014
(73) Titulaire: Nexans, 92400 Courbevoie (FR)
(72) Inventeur: ALRIC, Jérome, F-38080 L'Isle-d'Abeau (FR); ALLAIS, Arnaud, F-69400 Limas (FR); GOUTILLE, Yannick, F-69100 Villeurbanne (FR); FOURNIER, Jérome, F-69006 Lyon (FR)
(74) Mandataire: Peguet, Wilfried
(86) Numéro de dépôt international: PCT/FR2013/050139
(87) Numéro de publication internationale: WO 2013/110893

(56) Documents cités:
- WO-A1-2011/102581
- US-A1- 2002 127 401
- DATABASE WPI Week 200548 Thomson Scientific, London, GB; AN 2005-474670 XP002686184, & KR 2005 0017920 A (HANWHA CHEM CORP) 23 février 2005 (2005-02-23)
- DATABASE WPI Week 199820 Thomson Scientific, London, GB; AN 1998-222472 XP002686185, & JP 10 064338 A (HITACHI CABLE LTD) 6 mars 1998 (1998-03-06)

## Description

La présente invention se rapporte à un câble électrique comprenant un conducteur électrique allongé entouré par une couche polymérique non réticulée.

Elle s'applique typiquement, mais non exclusivement, aux domaines des câbles d'énergie à moyenne tension (notamment de 6 à 45-60 kV) ou à haute tension (notamment supérieur à 60 kV, et pouvant aller jusqu'à 800 kV), qu'ils soient à courant continu ou alternatif.

Les câbles d'énergie à moyenne ou haute tension comprennent typiquement un conducteur électrique central et, successivement et coaxialement autour de ce conducteur électrique, une couche interne semi-conductrice, une couche intermédiaire électriquement isolante, une couche externe semi-conductrice. Ces couches sont à base de polymère(s) et peuvent être réticulées ou non.

La discontinuité des propriétés électriques entre la couche électriquement isolante et les couches semi-conductrices de ce type de câble peut entrainer un renforcement local du champ électrique par accumulation de charge d'espace ou d'espèces chargées susceptibles d'initier une arborescence sous l'action d'un champ électrique.

Notamment, la présence de l'humidité combinée à la présence d'un champ électrique avec un matériau polymère favorisent la dégradation progressive des propriétés isolantes desdits câbles d'énergie moyenne et haute tension.

Ce mécanisme de dégradation, bien connu sous les termes « croissance d'arborescences électriques due à l'eau » (ou « water treeing » en anglais), peut ainsi mener au claquage du câble électrique concerné et constitue donc une menace considérable pour la fiabilité du réseau de transport d'énergie avec des conséquences économiques bien connues engendrées par les courts-circuits.

Notamment, il est difficile de limiter de façon optimale les croissances d'arborescences électriques dues à l'eau lorsque les couches semi-conductrices et électriquement isolantes sont des couches non réticulées, du fait de la moindre cohésion physico-chimique entre les chaines de polymères.

Le but de la présente invention est de pallier les inconvénients des techniques de l'art antérieur en proposant un câble électrique comprenant au moins une couche polymérique non réticulée, destiné notamment à être utilisé dans le domaine des câbles d'énergie à moyenne tension ou à haute tension, présentant une résistance au claquage améliorée de façon significative après un vieillissement, notamment dans un environnement humide, en présence d'un champ électrique continu ou alternatif (typiquement supérieur à 25 kV/mm), ces conditions étant classiquement propices à la formation d'espèces chargées électriquement.

La présente invention a pour objet un câble électrique comprenant un conducteur électrique allongé entouré par une couche non réticulée, ou en d'autres termes une couche thermoplastique, d'un matériau polymère greffé, obtenue à partir d'une composition polymérique comprenant : au moins une polyoléfine, et un composé destiné à être greffé à la polyoléfine, caractérisé en ce que ledit composé destiné à être greffé est un composé de greffage comprenant au moins un groupement époxy et une unique fonction réactive apte à se greffer à la polyoléfine. De préférence, l'unique fonction réactive est différente du groupement époxy.

On obtient donc un matériau polymère non réticulé du type polyoléfine greffée avec des groupements époxy.

Le composé de greffage est utilisé dans la présente invention en tant qu'agent retardant les arborescences d'eau.

Grâce à l'invention, la couche non réticulée permet de limiter de façon significative les arborescences d'eau du fait de la présence des composés de greffage greffés le long de la chaîne macromoléculaire de la polyoléfine. Plus particulièrement, cela concerne la tenue au claquage électrique, et notamment la capacité à dissiper les charges d'espace qui s'accumulent notamment dans les câbles hautes tension sous courant continu.

D'ailleurs, pour garantir les propriétés les plus optimales en tant qu'agent retardant les arborescences d'eau, les conditions de greffage mises en oeuvre pour greffer le composé de greffage sur la polyoléfine, ne permettent de préférence pas l'ouverture du groupement époxy.

En outre, la couche non réticulée du matériau polymère greffé de l'invention présente l'avantage d'être économique, facile à mettre en oeuvre, notamment par extrusion, et à fabriquer, puisqu'elle ne nécessite pas de recourir à des procédés longs et coûteux de réticulation. De plus, elle peut être avantageusement facilement recyclée.

D'ailleurs, du fait de la présence d'une unique fonction réactive, ledit composé de greffage ne peut participer à la réticulation de la polyoléfine.

Le composé de greffage de l'invention est de préférence un composé organique différent d'un polymère. En d'autres termes, le composé de greffage n'est notamment pas issu de l'enchaînement covalent d'un grand nombre de motifs monomères identiques ou différents. Plus particulièrement, le composé de greffage n'est pas issu de l'enchaînement covalent d'au moins deux motifs monomères identiques ou différents.

Selon l'invention, ladite fonction réactive du composé de greffage peut être une fonction insaturée (i.e. liaison insaturée carbone-carbone), et de préférence une fonction vinylique, et de façon particulièrement préférée une fonction éthylénique du type CH₂=CH-.

Le groupement époxy du composé de greffage peut être quant à lui un groupement oxirane (i.e. un groupement d'oxyde d'éthylène).

De préférence, le composé de greffage selon l'invention peut être choisi parmi les esters de glycidyle.

On peut citer, à titre d'exemple préféré le méthacrylate de glycidyle (GMA) (i.e. 1-Propanol, 2,3-epoxy-, methacrylate).

La composition polymérique de l'invention peut comprendre au plus 5% en poids de composé de greffage. De préférence, elle peut comprendre de 0,1% à 3% en poids de composé de greffage.

Afin d'obtenir le matériau polymère greffé selon l'invention, le composé de greffage est greffé le long de la chaîne macromoléculaire (i.e. chaîne principale ou « *backbone* ») de ladite polyoléfine par des techniques bien connues de l'homme du métier. Les extrémités de la chaîne macromoléculaire de la polyoléfine peuvent être quant à elles greffées ou pas avec ledit composé de greffage.

Selon la présente invention, le composé destiné à être greffé à la polyoléfine peut être greffé de façon directe ou indirecte à la polyoléfine.

### Greffage direct :

Selon une première variante de l'invention, le matériau polymère greffé est obtenu en greffant le composé de greffage directement sur la polyoléfine. En d'autres termes, le matériau polymère greffé est obtenu en greffant le composé de greffage sans l'intermédiaire d'un agent de couplage positionné entre ledit composé de greffage et la polyoléfine.

Dans un premier exemple de réalisation de ladite première variante, ce type de greffage peut être classiquement effectué en utilisant un agent de greffage, le greffage du composé de greffage sur la polyoléfine se faisant alors selon un mécanisme radicalaire amorcé par l'agent de greffage.

L'agent de greffage peut être par exemple un peroxyde organique. Ledit peroxyde organique est ajouté en une quantité suffisante pour permettre le greffage du composé de greffage sur la polyoléfine, tout en évitant sensiblement la réticulation de ladite polyoléfine.

Par exemple, la composition polymérique peut comprendre au plus 1% en poids d'un agent de greffage, et de préférence au plus 0,5% en poids d'un agent de greffage.

Dans un deuxième exemple de réalisation de ladite première variante, ce type de greffage peut être classiquement effectué par faisceaux d'électrons (i.e. « e-beam »), notamment par rayonnements Bêta.

Cette technique est bien connue de l'homme du métier, et ce dernier pourra facilement choisir les paramètres les plus adéquates, tels que la puissance des irradiations, la nature des irradiations (e.g. Alpha, Béta, Gamma, ...etc), et la durée des irradiations, pour obtenir le matériau polymère greffé.

Typiquement, ce deuxième exemple de réalisation ne comprend de préférence pas d'agent de greffage tel que défini ci-avant, et plus particulièrement ne comprend pas de peroxyde organique.

### Greffage indirect par l'intermédiaire d'un agent de couplage :

Selon une deuxième variante de l'invention, le matériau polymère greffé est obtenu en greffant le composé de greffage indirectement sur la polyoléfine. En d'autres termes, le matériau polymère greffé est obtenu en greffant le composé de greffage par l'intermédiaire d'un agent de couplage positionné entre ledit composé de greffage et la polyoléfine.

A ce titre, la composition polymérique de l'invention peut comprendre en outre un agent de couplage.

L'agent de couplage facilite le greffage (indirect) du composé de greffage sur la polyoléfine.

L'agent de couplage peut comprendre une unique fonction réactive apte à se greffer à la polyoléfine.

Ainsi, du fait de la présence de ladite unique fonction réactive, ledit agent de couplage ne pourrait participer à la réticulation de la polyoléfine.

Ladite fonction réactive de l'agent de couplage peut être une fonction insaturée (i.e. liaison insaturée carbone-carbone), et de préférence une fonction vinylique, et de façon particulièrement préférée une fonction éthylénique du type CH₂=CH-.

L'agent de couplage peut être un composé aromatique comprenant au moins un noyau aromatique et ladite unique fonction réactive apte à se greffer à la polyoléfine. L'unique fonction réactive est de préférence différente du noyau aromatique.

L'agent de couplage de l'invention est de préférence un composé différent d'un polymère. En d'autres termes, l'agent de couplage n'est notamment pas issu de l'enchaînement covalent d'un grand nombre de motifs monomères identiques ou différents. Plus particulièrement, l'agent de couplage n'est pas issu de l'enchaînement covalent d'au moins deux motifs monomères identiques ou différents.

Ledit noyau aromatique peut être plus particulièrement un hydrocarbure aromatique monocyclique ou polycyclique. Il peut être choisi parmi un cycle benzénique et un dérivé benzénique.

Le composé aromatique peut être un composé représenté par la formule générale (I) suivante : 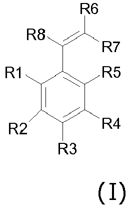 dans laquelle les groupements R1 à R8 sont choisis indépendamment les uns des autres parmi un atome d'hydrogène, un groupement alkyle (de préférence, de 1 à 8 atomes de carbone), et un groupement aryle (de préférence, un dérivé benzénique ou un groupement phényle-alkyle).

Le composé aromatique peut être choisi parmi le styrène, les dérivés du styrène, et leurs isomères, ou un de leurs mélanges.

Selon un premier mode de réalisation, les groupements R6 et R7 de la formule I sont des atomes d'hydrogène. A titre d'exemple, on peut citer le vinyl benzène ; ou le 4-methyl-2,4-diphenyl pentène comme un des dérivés du styrène.

Selon un deuxième mode de réalisation, le groupement R6 ou le groupement R7, ou les groupements R6 et R7, de la formule I est/sont différent(s) d'un atome d'hydrogène. A titre d'exemple, le composé aromatique de l'invention peut être le triphenyl éthylène.

Dans le cadre de la présente invention, on peut également considérer qu'un des dérivés du styrène peut être choisi parmi les hydrocarbures aromatiques polycycliques (HAP).

Plus particulièrement, on peut citer, comme HAP :
- les vinyl naphthalene, comme par exemple le 2-vinyl naphtalene ;
- les vinyl anthracene, comme par exemple le 9-vinyl anthracene ou le 2-vinyl anthracene ; et
- les vinyl phenanthrene, comme par exemple le 9-vinyl phenanthrene,
ou un de leurs mélanges.

Dans un mode de réalisation avantageux, la composition polymérique de l'invention peut comprendre au plus 8,0% en poids d'agent de couplage, et de préférence au plus 5,0% en poids d'agent de couplage. De façon particulièrement préférée, elle peut comprendre de 0,1% à 2,0% en poids d'agent de couplage. Cette valeur en pourcentage en poids peut s'appliquer plus particulièrement lorsque la composition comprend au moins 60% en poids de polymère(s), de préférence au moins 80% en poids de polymère(s), et de préférence au moins 90% en poids de polymère(s).

Plus particulièrement, la composition polymérique de l'invention peut comprendre au plus 8,0 parties en poids d'agent de couplage pour 100 parties en poids de polymère(s) dans la composition polymérique, et de préférence au plus 5,0 parties en poids d'agent de couplage pour 100 parties en poids de polymère(s) dans la composition polymérique. De façon particulièrement préférée, elle peut comprendre de 0,1 à 2,0 parties en poids d'agent de couplage pour 100 parties en poids de polymère(s) dans la composition polymérique.

De façon particulièrement préférée, la quantité d'agent de couplage dans la composition est équimolaire à celle de la quantité de composé de greffage.

Lorsque la composition selon l'invention comprend en outre un agent de couplage, il est préférable qu'elle comprenne également un agent de greffage, le greffage de l'agent de couplage sur la polyoléfine se faisant alors selon un mécanisme radicalaire amorcé par l'agent de greffage.

L'agent de greffage peut être par exemple un peroxyde organique. Ledit peroxyde organique est ajouté en une quantité suffisante pour permettre le greffage du composé de greffage sur la polyoléfine, tout en évitant sensiblement la réticulation de ladite polyoléfine.

Par exemple, la composition polymérique peut comprendre au plus 1% en poids d'un agent de greffage, et de préférence au plus 0,5% en poids d'un agent de greffage.

Dans la présente invention, on entend par « composition polymérique » une composition obtenue à partir d'un ou de plusieurs polymères organiques, permettant notamment de la mettre en forme par extrusion.

La composition polymérique de l'invention comprend au moins une polyoléfine. Le terme « polyoléfine » en tant que tel signifie de façon générale polymère d'oléfine du type homopolymère ou copolymère d'oléfine. De préférence, ledit polymère d'oléfine est un polymère d'oléfine non cyclique.

Dans la présente invention, on préférera utiliser un polymère d'éthylène (homo- ou copolymère d'éthylène) ou un polymère de propylène (homo- ou copolymère de propylène).

A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les polyéthylène-butène (PEB), les copolymères d'éthylène et de propylène (EPR) tels que par exemple les terpolymères d'éthylène propylène diène (EPDM), et leurs mélanges.

On préférera utiliser un polyéthylène haute densité (HDPE), un polyéthylène basse densité (LDPE), ou un homopolymère de propylène (PP).

La composition polymérique de la couche non réticulée de l'invention peut comprendre plus de 50,0 parties en poids de polyoléfine pour 100 parties en poids de polymère(s) (i.e. matrice polymère) dans la composition, de préférence au moins 70 parties en poids de polyoléfine pour 100 parties en poids de polymère(s) dans ladite composition, et de façon particulièrement préférée au moins 90 parties en poids de polyoléfine pour 100 parties en poids de polymère(s) dans ladite composition.

De façon particulièrement avantageuse, le ou les polymères constitutifs de la composition polymérique de couche non réticulée sont uniquement une ou des polyoléfines. Dans ce cas, on préférera utiliser un seul type de polyoléfine dans la composition tel qu'un HDPE, un LDPE ou un PP.

La composition polymérique selon l'invention peut comprendre en outre au moins un agent de protection tel qu'un antioxydant. Les antioxydants permettent de protéger la composition des contraintes thermiques engendrées lors des étapes de fabrication du câble ou de fonctionnement du câble.

D'autres additifs et/ou d'autres charges bien connus de l'homme du métier peuvent également être ajoutés à la composition polymérique de l'invention tels que des retardateurs de grillage ; des agents favorisants la mise en oeuvre tels que des lubrifiants ou des cires ; des agents compatibilisants ; des agents de couplage ; des stabilisants UV ; des charges non-conductrices ; des charges conductrices ; et/ou des charges semi-conductrices.

Dans un mode de réalisation particulièrement préféré, la couche non réticulée de l'invention peut comprendre moins de 50 parties en poids de charge ignifugeante inorganique, notamment du type trihydroxyde d'aluminium (ATH), dihydroxyde de magnésium (MDH) et/ou hydrotalcite, pour 100 parties en poids de matériau polymère greffé, de préférence moins de 20 parties en poids de charge ignifugeante inorganique, pour 100 parties en poids de matériau polymère greffé, et de façon particulièrement préférée la couche non réticulée de l'invention ne comprend sensiblement pas de charge ignifugeante inorganique.

Plus particulièrement, la couche non réticulée de l'invention peut comprendre moins de 50 parties en poids de charge ignifugeante inorganique, notamment du type trihydroxyde d'aluminium (ATH), dihydroxyde de magnésium (MDH) et/ou hydrotalcite, pour 100 parties en poids de polymère(s) dans la composition polymérique, de préférence moins de 20 parties en poids de charge ignifugeante inorganique pour 100 parties en poids de polymère(s) dans la composition polymérique, et de façon particulièrement préférée la couche non réticulée de l'invention ne comprend sensiblement pas de charge ignifugeante inorganique.

Ainsi, ce type de couche non réticulée ne comprenant pas ou peu de charge ignifugeante inorganique permet une application avantageuse dans les câbles d'énergie à moyenne ou à haute tension.

La couche non réticulée selon l'invention peut être facilement caractérisée par la détermination de son taux de gel selon la norme ASTM D2765-01. Plus particulièrement, ladite couche non réticulée peut avoir avantageusement un taux de gel, selon la norme ASTM D2765-01, d'au plus 20%, de préférence d'au plus 10%, de préférence d'au plus 5%, et de façon particulièrement préférée de 0%. La couche dite non réticulée présente ainsi l'avantage d'avoir une résistance électrique au claquage améliorée de façon significative. De manière générale, une couche dite « réticulée » peut présenter un taux de gel d'au moins 60%, selon la norme ASTM D2765-01.

Dans un mode de réalisation particulièrement préféré, le câble électrique selon la présente invention peut comprendre une première couche semi-conductrice (dite « couche interne »), entourant le conducteur électrique allongé, une deuxième couche électriquement isolante, entourant la première couche, et une troisième couche semi-conductrice (dite « couche externe ») entourant la deuxième couche, au moins une de ces trois couches étant la couche non réticulée de l'invention.

Selon un mode de réalisation préféré, la couche non réticulée de l'invention est la couche électriquement isolante (i.e. deuxième couche). Dans le cas de la couche électriquement isolante, la composition réticulable ne comprend pas, de préférence, de charge (électriquement) conductrice et/ou ne comprend pas de charge semi-conductrice.

Plus particulièrement, au moins deux des trois couches du câble sont des couches non réticulées, et de préférence les trois couches du câble sont des couches non réticulées.

Lorsque la composition polymérique est utilisée pour la fabrication des couches semi-conductrices (première couche et/ou troisième couche), la composition non réticulable comprend en outre au moins une charge (électriquement) conductrice ou une charge semi-conductrice, en une quantité suffisante pour rendre la composition polymérique semi-conductrice.

On considèrera plus particulièrement qu'un matériau est électriquement isolant lorsque sa conductivité électrique est d'au plus 1.10-⁹ S/m.

On considérera plus particulièrement qu'un matériau est semiconducteur lorsque sa conductivité électrique est d'au moins 1.10⁻³ S/m.

La composition polymérique utilisée pour obtenir un matériau semiconducteur peut comprendre de 0,1 à 40% en poids de charge (électriquement) conductrice, de préférence au moins 15% en poids de charge conductrice, et encore plus préférentiellement au moins 25% en poids de charge conductrice.

La charge conductrice peut être choisie avantageusement parmi les noirs de carbone, les nanotubes de carbone, et les graphites, ou un de leurs mélanges.

Que ce soient la première couche semi-conductrice, la deuxième couche électriquement isolante et/ou la troisième couche semi-conductrice, au moins une de ces trois couches peut être une couche extrudée, de préférence deux de ces trois couches sont des couches extrudées, et encore plus préférentiellement ces trois couches sont des couches extrudées.

Dans un mode de réalisation particulier, généralement conforme au câble électrique bien connu dans le domaine d'application de l'invention, la première couche semi-conductrice, la deuxième couche électriquement isolante et la troisième couche semi-conductrice constituent une isolation tricouche. En d'autres termes, la deuxième couche électriquement isolante est directement en contact physique avec la première couche semi-conductrice, et la troisième couche semi-conductrice est directement en contact physique avec la deuxième couche électriquement isolante.

Le câble électrique de l'invention peut comprendre en outre un écran métallique entourant la troisième couche semi-conductrice.

Cet écran métallique peut être un écran dit « filaire », composé d'un ensemble de conducteurs en cuivre ou aluminium arrangé autour et le long de la troisième couche semi-conductrice, un écran dit « rubané » composé d'un ou de plusieurs rubans métalliques conducteurs posé(s) en hélice autour de la deuxième couche semi-conductrice, ou d'un écran dit « étanche » de type tube métallique entourant la deuxième couche semi-conductrice. Ce dernier type d'écran permet notamment de faire barrière à l'humidité ayant tendance à pénétrer le câble électrique en direction radiale.

Tous les types d'écran métalliques peuvent jouer le rôle de mise à la terre du câble électrique et peuvent ainsi transporter des courants de défaut, par exemple en cas de court-circuit dans le réseau concerné.

En outre, le câble électrique de l'invention peut comprendre une gaine extérieure de protection entourant la troisième couche semi-conductrice, ou bien entourant plus particulièrement ledit écran métallique lorsqu'il existe. Cette gaine extérieure de protection peut être réalisée classiquement à partir de matériaux thermoplastiques appropriées tels que des HDPE, des MDPE ou des LLDPE ; ou encore des matériaux retardant la propagation de la flamme ou résistant à la propagation de l'incendie. Notamment, si ces derniers matériaux ne contiennent pas d'halogène, on parle de gainage de type HFFR (pour l'anglicisme « *Halogen Free Flame Retardant* »).

D'autres couches, telles que des couches gonflantes en présence d'humidité, peuvent être ajoutées entre la troisième couche semi-conductrice et l'écran métallique lorsqu'il existe, et/ou entre l'écran métallique et la gaine extérieure lorsqu'ils existent, ces couches permettant d'assurer l'étanchéité longitudinale et/ou transversale du câble électrique à l'eau. Le câble électrique de l'invention peut également comprendre des matières gonflantes en présence d'humidité pour obtenir une « âme étanche ».

La conductivité électrique du câble électrique de l'invention est notamment améliorée par la présence des cycles aromatiques.

Un autre objet concerne l'utilisation de la couche non réticulée d'un câble électrique, de l'invention, pour limiter les arborescences d'eau en courant alternatif ou continu.

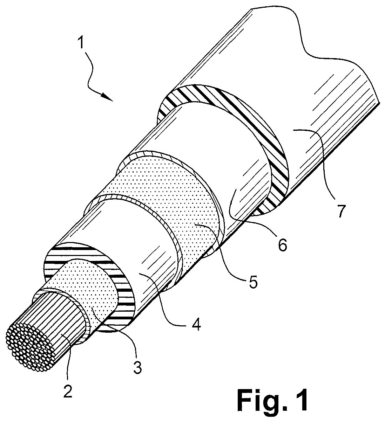

D'autres caractéristiques et avantages de la présente invention apparaîtront à la lumière de la description d'un exemple non limitatif d'un câble électrique selon l'invention fait en référence à la figure 1 représentant une vue schématique en coupe transversale d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble d'énergie 1 à moyenne ou haute tension, illustré dans la figure 1, comprend un élément conducteur 2 central allongé, notamment en cuivre ou en aluminium. Le câble d'énergie 1 comprend en outre plusieurs couches disposées successivement et coaxialement autour de cet élément conducteur 2, à savoir : une première couche 3 semi-conductrice dite « couche semi-conductrice interne », une deuxième couche 4 électriquement isolante, une troisième couche 5 semi-conductrice dite « couche semi-conductrice externe », un écran métallique 6 de mise à la terre et/ou de protection, et une gaine extérieure de protection 7, les couches 3, 4 et 5 pouvant être obtenues à partir d'une composition polymérique selon l'invention. Les couches 3, 4 et 5 sont des couches extrudées et non réticulées.

La présence de l'écran métallique 6 et de la gaine extérieure de protection 7 est préférentielle, mais non essentielle, cette structure de câble étant en tant que telle bien connue de l'homme du métier.

### Exemples

### 1. Greffage direct par rayonnement Bêta

La composition selon l'invention comprend les composés suivants :
- 100 parties en poids d'une polyoléfine du type copolymère de propylène et d'éthylène, commercialisé par la société Lyondellbasell, sous la référence Hifax CA7441A, et
- 1,1 parties en poids d'un composé de greffage du type méthacrylate de glycidyle (GMA), commercialisé par la société Dow Chemicals, par rapport à 100 parties en poids de polyoléfine.

Lesdits composés sont mélangés et mis en forme à l'aide d'une extrudeuse bi-vis Leistritz. A la sortie de l'extrudeuse, on obtient des granulés.

Puis, on place les granulés dans un appareil à bombardement électronique afin d'irradier les granulés par des rayonnements Bêta à 10 kGy (kilo gray).

Par conséquent, après irradiation, on obtient un matériau polymère greffé avec des groupements époxy.

Afin de vérifier que le greffage du GMA a bien été effectué, la mesure du taux de GMA greffé est réalisée par spectroscopie Infra Rouge. Il existe d'autres techniques (qualitatives uniquement) comme par exemple la mesure de la viscosité qui permet de comparer d'une part la viscosité de la composition ayant subi ladite irradiation Bêta à 10 kGy, et d'autre part cette même composition mais n'ayant subi aucune irradiation.

On s'aperçoit que les viscosités sont bien différentes, ce qui confirme que le greffage du GMA sur la chaîne macromoléculaire de la polyoléfine a bien eu lieu grâce à l'irradiation Bêta.

### 2. Greffage indirect en utilisant un agent de couplage

La composition selon l'invention comprend les composés suivants :
- 100 parties en poids d'une polyoléfine du type polyéthylène basse densité (LDPE), commercialisé par la société INEOS sous la référence BPD-2000,
- 3 parties en poids d'un composé de greffage du type Méthacrylate de glycidyle (GMA), commercialisé par la société Dow Chemicals, pour 100 parties en poids de polyoléfine,
- 0,3 partie en poids d'un agent de greffage du type peroxyde organique, commercialisé par la société d'AkzoNobel sous la référence PERKADOX BC-FF, pour 100 parties en poids de polyoléfine, et
- un agent de couplage du type styrène (i.e. vinyle benzène - CAS-No 100-42-5), commercialisé par la société SIGMA-ALDRICH, en une quantité équimolaire à la quantité de GMA, à savoir 2,1 parties en poids dudit agent de couplage pour 100 parties en poids de polyoléfine.

Lesdits composés sont mélangés et mis en forme à l'aide d'une extrudeuse bi-vis Leistritz. Plus particulièrement, une fois la polyoléfine introduite dans l'extrudeuse, on utilise une pompe pour introduire le mélange constitué de styrène, de GMA et de peroxyde organique, et ainsi former la composition selon l'invention.

Les températures au sein de l'extrudeuse doivent permettre au peroxyde de se décomposer, afin de pouvoir greffer le styrène sur la chaîne macromoléculaire du LDPE. A ce titre, les températures sont supérieures à 170°C et peuvent atteindre 220°C.

Le greffage du GMA sur le polyéthylène se fait selon le mécanisme radicalaire suivant :

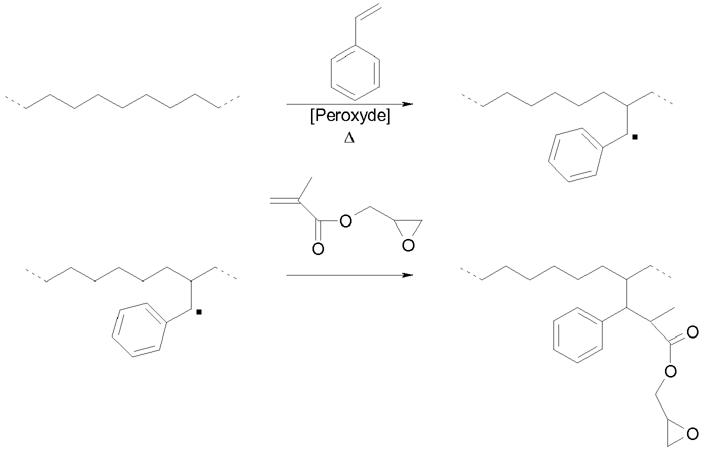

Ainsi la mise en oeuvre de la composition selon l'invention a une température permettant de décomposer le peroxyde permet d'obtenir une composition comportant des agents de couplage greffés sur le LDPE, et notamment greffé sur la chaîne macromoléculaire du LDPE, ces agents de couplage facilitant alors le greffage de l'agent de greffage sur ledit agent de couplage par voie radicalaire.

Par conséquent, en sortie d'extrudeuse, on obtient un matériau polymère greffé avec des groupements époxy.

## Revendications

1. Câble électrique (1) comprenant un conducteur électrique (2) allongé entouré par une couche non réticulée d'un matériau polymère greffé, obtenue à partir d'une composition polymérique comprenant : au moins une polyoléfine, et un composé destiné à être greffé à la polyoléfine, **caractérisé en ce que** ledit composé destiné à être greffé est un composé de greffage comprenant au moins un groupement époxy et une unique fonction réactive apte à se greffer à la polyoléfine.

2. Câble selon la revendication 1, **caractérisé en ce que** l'unique fonction réactive du composé de greffage est une fonction insaturée.

3. Câble selon la revendication 2, **caractérisé en ce que** la fonction insaturée est une fonction vinylique.

4. Câble selon la revendication 2, **caractérisé en ce que** la fonction insaturée est une fonction éthylénique.

5. Câble selon l'une quelconque des revendications précédentes, **caractérisé en ce que** le groupement époxy est un groupement oxirane.

6. Câble selon l'une quelconque des revendications précédentes, **caractérisé en ce que** le composé de greffage est le méthacrylate de glycidyle (GMA).

7. Câble selon l'une quelconque des revendications 1 à 6, **caractérisé en ce que** le matériau polymère greffé est obtenu en greffant le composé de greffage directement sur la polyoléfine.

8. Câble selon la revendication 7, **caractérisé en ce que** le greffage du composé de greffage sur la polyoléfine est effectué par faisceaux d'électrons.

9. Câble selon l'une quelconque des revendications 1 à 6, **caractérisé en ce que** le matériau polymère greffé est obtenu en greffant le composé de greffage indirectement sur la polyoléfine.

10. Câble selon la revendication 9, **caractérisé en ce que** la composition comprend en outre un agent de couplage comprenant une unique fonction réactive apte à se greffer à la polyoléfine.

11. Câble selon la revendication 10, **caractérisé en ce que** l'agent de couplage est un composé aromatique choisi parmi le styrène, les dérivés du styrène, et leurs isomères, ou un de leurs mélanges.

12. Câble selon l'une quelconque des revendications précédentes, **caractérisé en ce que** la couche non réticulée a un taux de gel, selon la norme ASTM D2765-01, d'au plus 20%, et de préférence d'au plus 10%.

13. Câble selon l'une quelconque des revendications précédentes, **caractérisé en ce que** la composition polymérique comprend plus de 50 parties en poids de polyoléfine pour 100 parties en poids de polymère(s).

14. Câble selon l'une quelconque des revendications précédentes, **caractérisé en ce qu'**il comprend une première couche (3) semi-conductrice entourant le conducteur électrique (2), une deuxième couche (4) électriquement isolante, entourant la première couche (3), et une troisième couche (5) semi-conductrice entourant la deuxième couche (4), au moins une de ces trois couches (3, 4, 5) étant la couche non réticulée.

15. Utilisation de la couche non réticulée d'un câble électrique, telle que définie aux revendications 1 à 13, pour limiter les arborescences d'eau.

## Patentansprüche

1. Stromkabel (1), umfassend einen verlängerten elektrischen Leiter (2), umgeben von einer nicht retikulierten Schicht aus einem gepfropften Polymermaterial, erhalten auf der Grundlage einer polymeren Zusammensetzung, umfassend: mindestens ein Polyolefin und eine Verbindung, die ausgelegt ist, um auf das Polyolefin gepfropft zu sein, **dadurch gekennzeichnet, dass** die Verbindung, die ausgelegt ist, um gepfropft zu werden, eine Pfropfverbindung ist, umfassend mindestens eine Epoxidgruppe und eine einzige reaktive Funktion, die ausgelegt ist, um auf das Polyolefin gepfropft zu werden.

2. Kabel nach Anspruch 1, **dadurch gekennzeichnet, dass** die einzige reaktive Funktion der Pfropfverbindung eine ungesättigte Funktion ist.

3. Kabel nach Anspruch 2, **dadurch gekennzeichnet, dass** die ungesättigte Funktion eine Vinylfunktion ist.

4. Kabel nach Anspruch 2, **dadurch gekennzeichnet, dass** die ungesättigte Funktion eine Ethylfunktion ist.

5. Kabel nach einem beliebigen der vorhergehenden Ansprüche, **dadurch gekennzeichnet, dass** die Epoxidgruppe eine Oxirangruppe ist.

6. Kabel nach einem beliebigen der vorhergehenden Ansprüche, **dadurch gekennzeichnet, dass** die Pfropfverbindung Glycidylmethacrylat (GMA) ist.

7. Kabel nach einem der Ansprüche 1 bis 6, **dadurch gekennzeichnet, dass** das gepfropfte Polymermaterial durch Pfropfen der Pfropfverbindung direkt auf das Polyolefin erhalten wird.

8. Kabel nach Anspruch 7, **dadurch gekennzeichnet, dass** das Pfropfen der Pfropfverbindung auf das Polyolefin durch Elektronenstrahlen durchgeführt wird.

9. Kabel nach einem der beliebigen der Ansprüche 1 bis 6, **dadurch gekennzeichnet, dass** das gepfropfte Polymermaterial durch Pfropfen der Pfropfverbindung indirekt auf das Polyolefin erhalten wird.

10. Kabel nach Anspruch 9, **dadurch gekennzeichnet, dass** die Zusammensetzung außerdem ein Kopplungsmittel umfasst, umfassend eine einzige reaktive Funktion, die ausgelegt ist, um auf das Polyolefin gepfropft zu werden.

11. Kabel nach Anspruch 10, **dadurch gekennzeichnet, dass** das Kopplungsmittel eine aromatische Verbindung ist, ausgewählt aus Styrol, den Derivaten von Styrol und ihren Isomeren oder einer ihrer Mischungen.

12. Kabel nach einem beliebigen der vorhergehenden Ansprüche, **dadurch gekennzeichnet, dass** die nicht retikulierte Schicht einen Gelgehalt gemäß der Norm ASTM D2765-01 von höchstens 20 % und vorzugsweise höchstens 10 % aufweist.

13. Kabel nach einem beliebigen der vorhergehenden Ansprüche, **dadurch gekennzeichnet, dass** die Polymerzusammensetzung mehr als 50 Gewichtsteile Polyolefin pro 100 Gewichtsteilen Polymer(en) umfasst.

14. Kabel nach einem beliebigen der vorhergehenden Ansprüche, **dadurch gekennzeichnet, dass** es eine erste halbleitende Schicht (3) umfasst, die den elektrischen Leiter (2) umgibt, eine zweite elektrisch isolierende Schicht (4), die die erste Schicht (3) umgibt, und eine dritte halbleitende Schicht (5), die die zweite Schicht (4) umgibt, wobei mindestens eine dieser drei Schichten (3, 4, 5,) eine nicht retikulierte Schicht ist.

15. Verwendung der nicht retikulierten Schicht eines elektrischen Kabels, wie in den Ansprüchen 1 bis 13 definiert, um die Water-treeings zu begrenzen.

## Claims

1. Electric cable (1) comprising an elongate electrical conductor (2) surrounded by a non-crosslinked layer of grafted polymer material, obtained from a polymeric composition comprising: at least one polyolefin, and a compound intended to be grafted onto the polyolefin, **characterized in that** said compound intended to be grafted is a grafting compound comprising at least one epoxy group and a single reactive function able to be grafted onto the polyolefin.

2. The cable according to claim 1, **characterized in that** the single reactive function of the grafting compound is an unsaturated function.

3. The cable according to claim 2, **characterized in that** the unsaturated function is a vinyl function.

4. The cable according to claim 2, **characterized in that** the unsaturated function is an ethylene function.

5. The cable according to any of the preceding claims, **characterized in that** the epoxy group is an oxirane group.

6. The cable according to any of the preceding claims, **characterized in that** the grafting compound is glycidyl methacrylate (GMA).

7. The cable according to any of claims 1 to 6, **characterized in that** the grafted polymer material is obtained by grafting the grafting compound directly onto the polyolefin.

8. The cable according to claim 7, **characterized in that** the grafting of the grafting compound onto the polyolefin is obtained by e-beaming.

9. The cable according to any of claims 1 to 6, **characterized in that** the grafted polymer material is obtained by grafting the grafting compound indirectly onto the polyolefin.

10. The cable according to claim 9, **characterized in that** the composition further comprises a coupling agent comprising a single reactive function able to be grafted onto the polyolefin.

11. The cable according to claim 10, **characterized in that** the coupling agent is an aromatic compound selected from among styrene, styrene derivatives and the isomers thereof, or one of the mixtures thereof.

12. The cable according to any of the preceding claims, **characterized in that** the non-crosslinked layer has a gel content as per standard ASTM D2765-01 of no more than 20 %, and preferably no more than 10 %.

13. The cable according to any of the preceding claims, **characterized in that** the polymeric composition comprises more than 50 parts by weight of polyolefin per 100 parts by weight of polymer(s).

14. The cable according to any of the preceding claims, **characterized in that** it comprises a first semiconductor layer (3) surrounding the electrical conductor (2), a second electrically insulating layer (4) surrounding the first layer (3), and a third semiconductor layer (5) surrounding the second layer (4), at least one of these three layers (3, 4, 5) being the non-crosslinked layer.

15. Use of the non-crosslinked layer of an electric cable such as defined in claims 1 to 13, to limit water treeing.
